# EUROPEAN PATENT SPECIFICATION

(11) **EP 2 234 233 B1**
(45) Date of publication and mention of the grant of the patent: **09.11.2011**
(21) Application number: 09290222.0
(22) Date of filing: 26.03.2009
(51) Int. Cl.: H02G 7/05

(54) **Suspension clamp**
Aufhängungsklemme
Pince de suspension

(43) Date of publication of application: 29.09.2010
(73) Proprietor: Tyco Electronics France SAS, 95300 Pontoise (FR)
(72) Inventor: Royer, Laurent, 21580 Courlon (FR)
(74) Representative: Patentanwaltskanzlei WILHELM & BECK

(56) References cited:
- US-A- 2 868 865

## Description

The invention relates to a suspension clamp according to claim 1.

It is known in the state of the art to use suspension clamps for supporting the conductor of an overhead power line. The clamp is attached to a mast via an insulator string. Such suspension clamps are for example known from the US 7,368,660 B2, the WO 2007/126349 A1, the WO 9734354 A1, the FR 2430116 A, the US 1,871,336 A, the US 1,871,336 A and the US 1,776,531 A. US 2,868,865 A teaches to provide a suspension clamp with a shunt member for providing a good electrical connection between a body of the clamp and a supporting portion of the clamp.

It is necessary to provide an accurate slipping control of the overhead power line in the suspension clamp. If one mast gets destroyed by for example a hurricane, a storm or an extra-icing load, a cascading collapse of neighboring masts must be avoided. It is therefore required to allow the overhead power line to slip through the suspension clamp for a distance of approximately one meter. The mechanical slipping force must be controlled within a range of minimum and maximum tension load on the overhead power line, without damaging the wires of the stranded conductor of the overhead power line.

It is an object of the invention to provide an improved suspension clamp for suspending an overhead power line. This objective is achieved by a suspension clamp according to claim 1.

According to the invention, the suspension clamp for suspending an overhead power line comprises a body with a contact surface and at least one locking system with a locking surface. The contact surface and the locking surface are designed for clamping the overhead power line. The suspension clamp further comprises a shunt with an electrically conductive surface, wherein the conductive surface is designed for electrically contacting the overhead power line. The contact surface and the locking surface comprise a lower electrical conductivity than the conductive surface of the shunt.

It is an advantage of this suspension clamp that the mechanical and the electrical functions of the suspension clamp are separated. The mechanical slipping control is ensured by the contact surface and the locking surface. The electrical function of the suspension clamp is ensured by the shunt which can be made of a highly conductive material.

According to a further development of the suspension clamp the contact surface and the locking surface are coated with a coating material. The coating material comprises a lower electrical conductivity than the material of the conductive surface of the shunt. Advantageously the mechanical slipping control is then supported by the coating which may have a lower friction coefficient than a highly conductive one. A further advantage is that the coating allows for repeating the slipping operation several times while keeping the slipping force values constant and avoiding a damage of the overhead power line.

Preferentially the coating material comprises molybdenum. Advantageously molybdenum has a low friction coefficient.

Also preferentially the shunt comprises copper. Advantageously, copper is highly electrically conductive.

According to an embodiment of the suspension clamp the shunt comprises the shape of a roller, wherein the conductive surface forms the tread of the roller. This embodiment has the advantage that the shunt does not limit the possibility of the overhead power line to slip through the suspension clamp, as the roller-shaped shunt can easily roll along the overhead power line.

According to another embodiment of the suspension clamp the shunt approximately comprises the profile of an isosceles trapezoid, wherein the conductive surface is arranged along the longer of the two parallel sides of the trapezoid. An advantage of this suspension clamp is that the conductive surface of the shunt provides a large surface area that is in contact with the overhead power line, therefore providing an improved electrical contact.

According to a further development of the suspension clamp a central area of the contact surface comprises a recess, wherein the conductive surface is arranged in the recess of the contact surface, wherein the contact surface and the conductive surface together form a supporting area for the overhead power line.

According to a further development of the suspension clamp the conductive surface of the shunt protrudes from the contact surface of the body. Advantageously this ensures a good electrical contact between the overhead power line and the conductive surface of the shunt.

According to another embodiment of the suspension clamp a first and a second locking system are provided, wherein the locking surfaces of the first and the second locking systems are opposed to the contact surface, wherein the locking surface of the first locking system, the conductive surface of the shunt and the locking surface of the second locking system are arranged consecutively in the running direction of the overhead power line.

In a further development of the suspension clamp the body comprises an essentially U-shaped profile formed by two upper arms, wherein the contact surface is arranged in a groove formed between the two upper arms. A lower ridge is attached to the closed side of the U-shaped body, wherein a central area of the lower ridge in the running direction of the overhead power line comprises a recess. The shunt is arranged in the recess of the lower ridge.

According to a further development the suspension clamp further comprises at least one strap that extends approximately perpendicular to the running direction of the overhead power line. The shunt, the strap and the body are connected by a first bolt.

In a further development of this embodiment the first bolt and the strap are electrically conductive. The first bolt provides an electrical connection between the shunt and the strap. Advantageously this allows an occasional short-circuit current to flow-out via the strap.

Preferentially the body and the strap are independently pivotable around the first bolt. Advantageously this allows for slight movements of the overhead power line, for example in the case of wind.

Preferentially, at least one insulating bearing is provided between the first bolt and the body. The insulating bearing electrically isolates the body from the first bolt.

According to a further development the suspension clamp comprises two straps which are connected by a second bolt. The second bolt is electrically connected to the two straps. Advantageously this allows to attach the suspension clamp to a mast via the second bolt.

The invention is now explained in greater detail with reference to the figures in which
Figure 1 shows a front view of a suspension clamp;
Figure 2 shows a sectional drawing of a suspension clamp;
Figure 3 shows a sectional drawing of a body of a suspension clamp;
Figure 4 shows another sectional drawing of a body of a suspension clamp;
Figure 5 shows a sectional drawing of a suspension clamp;
Figure 6 shows a detail of a suspension clamp;
Figure 7 shows a sectional drawing of a shunt;
Figure 8 shows another sectional drawing of a shunt;
Figure 9 shows a sectional drawing of a locking system;
Figure 10 shows another sectional drawing of a locking system;
Figure 11 shows a suspension clamp according to a second embodiment;
Figure 12 shows a detail of the suspension clamp according to the second embodiment; and
Figure 13 shows a diagram of the slipping force necessary to slip an overhead power line through a suspension clamp.

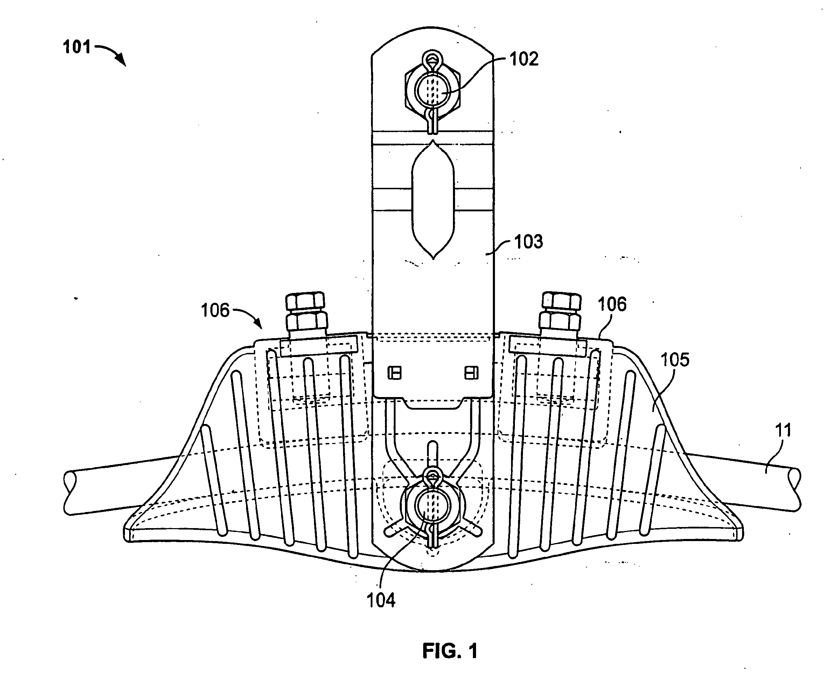

Throughout the description of figures 1 to 13, the same reference symbols are used for equal or equally acting components.

Figure 1 shows a front view of a suspension clamp 101 according to a first embodiment. The suspension clamp 101 is designed for suspending an overhead power line 11. The overhead power line 11 is an electrically conductive conductor that can be used for transmitting electrical power. The overhead power line 11 may for example be a stranded conductor comprising a plurality of metallic wires. The overhead power line 11 may for example comprise aluminum. The suspension clamp 101 is designed for being attached to a mast.

The suspension clamp 101 comprises a body 105 for supporting the overhead power line 11. The suspension clamp 101 comprises a first beam-like strap 103 that extends from the body 105 in a direction approximately perpendicular to the running direction of the overhead power line 11. A second strap 103 is arranged behind the first strap 103, not visible in figure 1. The straps 103 are connected to the body 105 with a first bolt 104. The first bolt 104 extends trough the straps 103 near one end of the beam-like straps 103. The first strap 103 and the second strap 103 are connected to each other with a second bolt 102 that extends trough the straps 103 near a second end of the beam-like straps 103.

The suspension clamp 101 further comprises two locking systems 106. The two locking systems 106 are connected to the body 105. The two locking systems 106 are arranged consecutively in the running direction of the overhead power line 11.

The body 105 can be made of a conductive or a non-conductive material. Preferably the body 105 is made of a metal. The straps 103 are made of a conductive material, for example a metal. The first bolt 104 and the second bolt 102 are made of an electrically conductive material, for example a metal.

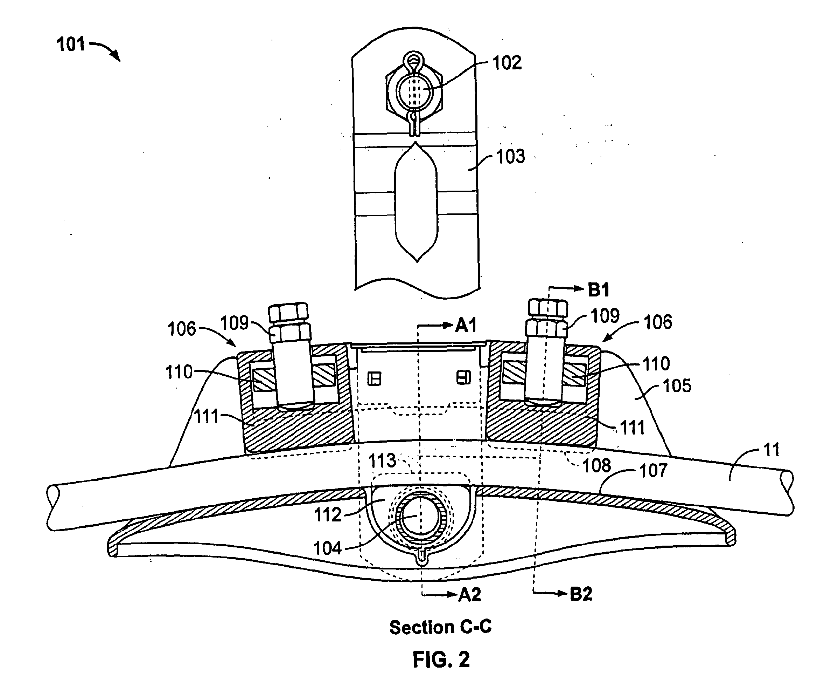

Figure 2 shows a sliced view of the suspension clamp 101. Figure 2 shows that the body 105 comprises a contact surface 107 that supports the overhead power line 11. The contact surface 107 is slightly curved in the running direction of the overhead power line 11. The curvature of the contact surface 107 is such that the weight of the overhead power line 11 provides contact between the overhead power line 11 and the contact surface 107 over a large segment of the contact surface 107 in the running direction of the overhead power line 11. The contact surface 107 of the body 105 is coated with a material with a low friction coefficient. The friction coefficient may for example be in the order 0.1. The coating may be electrically insulating or comprise a low electric conductivity. The electric conductivity may for example be such that the resistance between the body 105 and the overhead power line 11 is about 1 Ohm. The coating on the contact surface 107 may for example comprise molybdenum. The coating may also comprise a polymeric basis. The coating may for example comprise a molybdenum disulfide basis with auditioned resin on epoxy basis which bonds to the contact surface 107. The coating may be assimilated to a varnish. Alternatively, the coating material may be pure molybdenum.

Each of the two locking systems 106 comprises a locking surface 108 that is in contact with the overhead power line 11. Each locking surface 108 is opposed to the contact surface 107 of the body 105. The locking surfaces 108 are also coated with a coating material, preferably with the same material as the coating of the contact surface 107. The locking surfaces 108 and the contact surface 107 are designed for clamping the overhead power line 11 between the contact surface 107 and the locking surfaces 108.

The contact surface 107 comprises a recess in the central area of the contact surface 107. The recess in the contact surface 107 is arranged between the two locking systems 106 in the running direction of the overhead power line 11. A conductive surface 113 of a shunt 112 is arranged in the recess of the contact surface 107. The conductive surface 113 is arranged approximately coplanar with the contact surface 107 but protrudes slightly from the contact surface 107. The conductive surface 113 of the shunt 112 is electrically conductive. The material of the conductive surface 112 preferentially comprises a higher electric conductivity than the coating material on the contact surface 107 of the body 105.

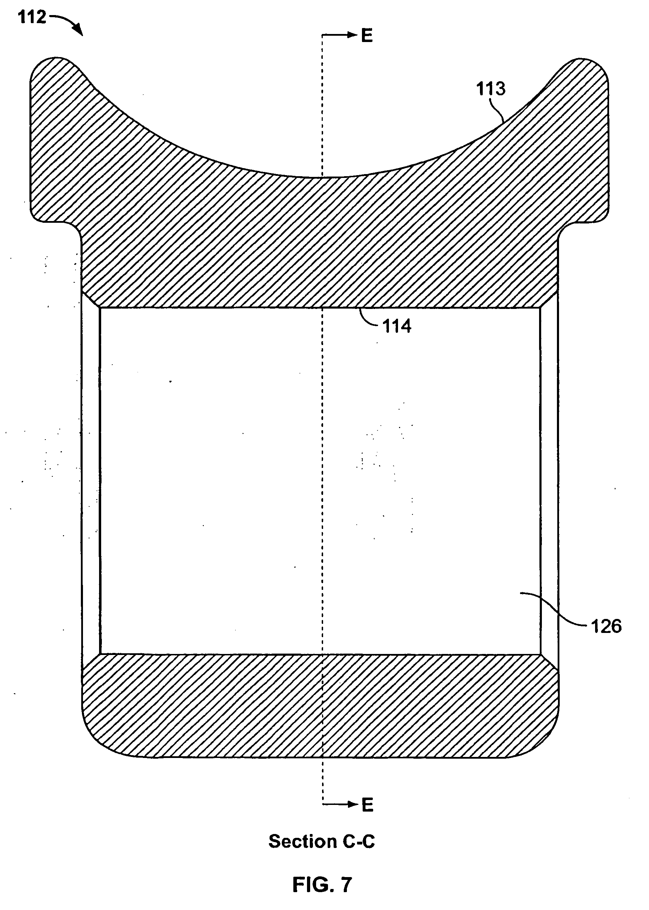

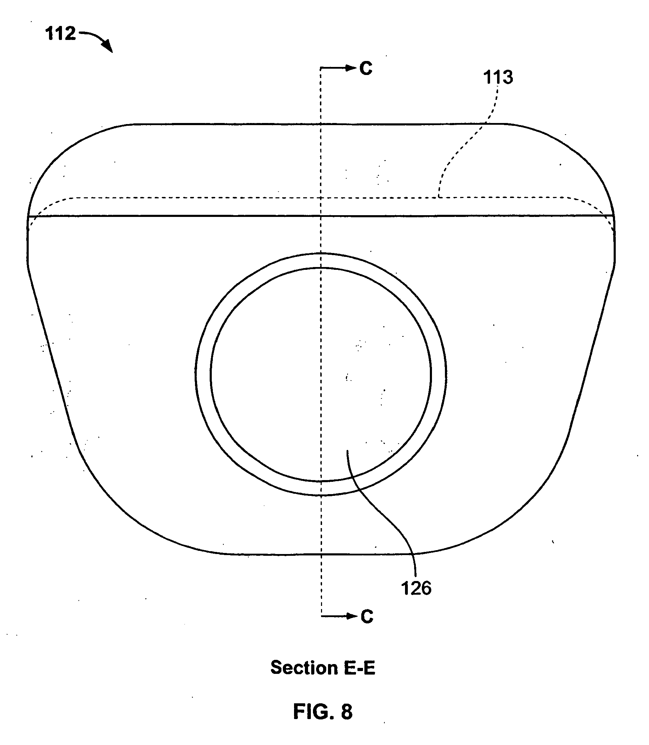

The shunt 112 and the conductive surface 113 of the shunt 112 may for example comprise copper or be made of pure copper. The shunt 112 will be explained in greater detail with references to figures 7 and 8 below.

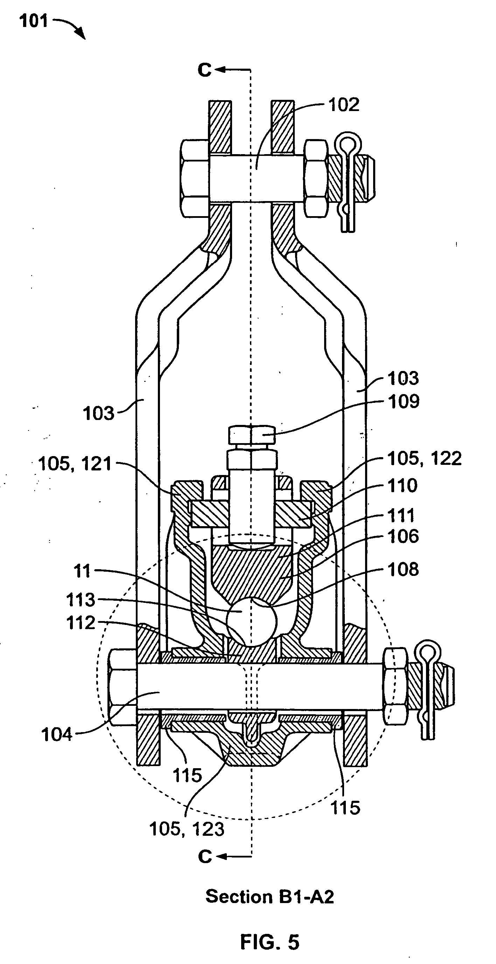

Each locking system 106 comprises a fixation body 111, a fixation plate 110 and a fixation bolt 109. The locking surface 108 is arranged on the fixation body 111. The locking systems 106 will be explained in greater detail with references to figures 5, 9 and 10 below.

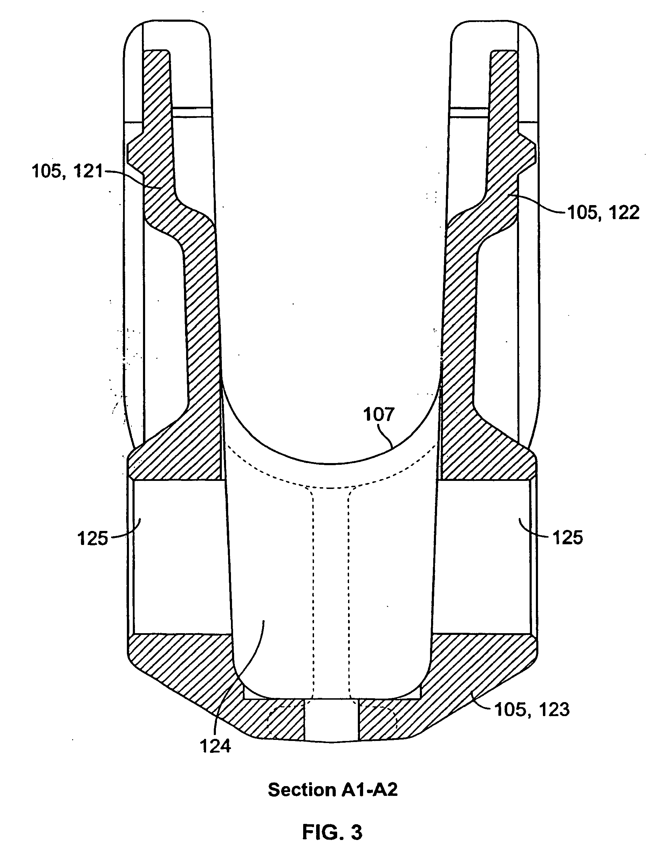

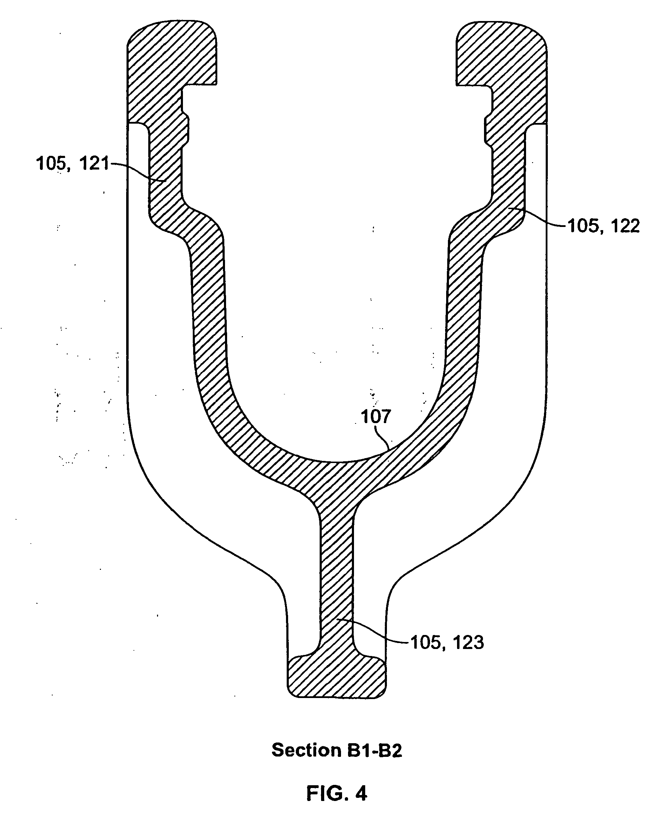

Figure 3 shows a vertical section through the body 105 along the line A1A2 shown in figure 2. Figure 4 shows a vertical section through the body 105 along the line B1B2 shown in figure 2. Figures 3 and 4 show that an upper part of the body 105 approximately comprises a U-shape with a first upper arm 121 and a second upper arm 122. The contact surface 107 is arranged between the first upper arm 121 and the second upper arm 122 and forms the lower surface of the U-shaped part of the body 105. The contact surface 107 is concave. This is advantageous as it increases the contact area between the contact surface 107 and the essentially cylindrical overhead power line 11.

Attached to the closed side of the U-shaped body 105 the body 105 comprises a lower ridge 123. In the section shown in figure 4 the body 105 approximately comprises the shape of the letter Y. In a central area of the body 105 in the running direction of the overhead power line 11, as it is shown in figure 3, the lower ridge 123 is widened and comprises a recess 124. In the area of the recess 124 the contact surface 107 comprises an opening. The recess 124 is provided for housing the shunt 112. In the central area of the body 105 the lower ridge 124 furthermore comprises a first bore 125 that extends perpendicular to the running direction of the running direction of the overhead power line 11 through the body 105. The first bore 125 is provided for housing the first bolt 104.

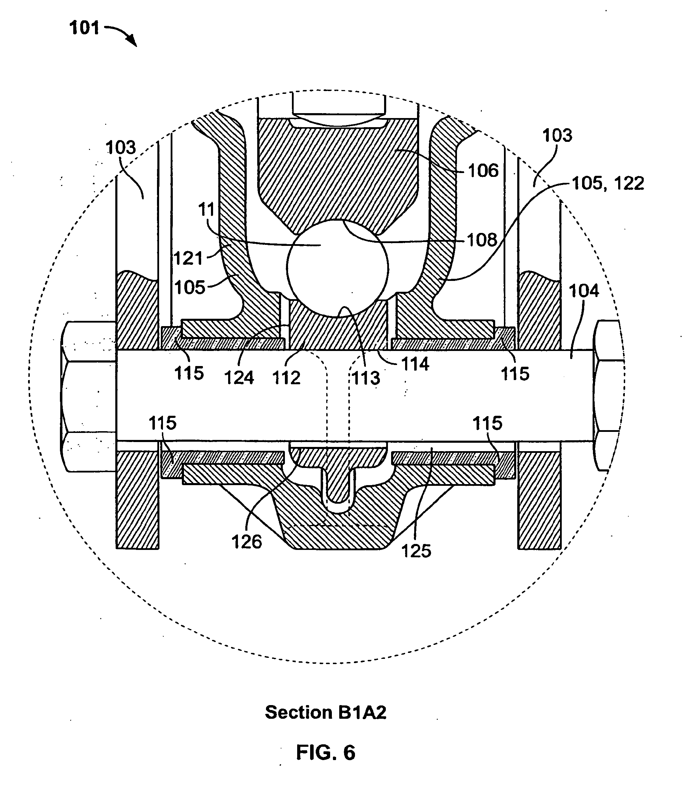

Figure 5 shows another sectional drawing of the suspension clamp 101 along the line B1A2 shown in figure 2. Figure 6 shows a magnified drawing of a central part of figure 5. Figure 5 shows the two straps 103. Near a first end of the two steps 103 the two straps 103 are connected with the first bolt 104. Near the second end of the straps 103 the straps 103 are connected with the second bolt 102. The first bolt 104 and the second bolt 102 are electrically coupled via the straps 103.

The body 105 is arranged between the two straps 103. The shunt 112 is arranged in the recess 124 of the body 105. The overhead power line 11 is supported by the contact surface 107 of the body 105 and the conductive surface 113 of the shunt 112.

One of the two locking systems 106 is shown between the first upper arm 121 and the second upper arm 122 of the body 105. The locking surface 108 of the fixation body 111 of the locking system 106 is in contact with the overhead power line 11 and presses the overhead power line 11 against the conductive surface 113 of the shunt 112 and the contact surface 107 of the body 105.

A contact pressure between the locking surface 108 and the overhead power line 11 is created by the fixation plate 110 and the fixation bolt 109 of the locking system 106. The fixation plate 111 rests against a flange of the body 105. The fixation bolt 109 extends through the fixation plate 110 and presses the fixation body 111 and the fixation plate 110 apart from each other, pressing the fixation body 111 with the locking surface 108 against the overhead power line 11. The fixation bolt 109 allows for regulating the contact pressure between the locking surface 108 and the overhead power line 11.

Arranged in the recess 124 in the lower ridge 123 of the body 105 is the shunt 112 with the conductive surface 113 that is in contact with the overhead power line 11. The shunt 112 comprises a second bore 126. The first bolt 104 extends through the first strap 103, the first bore 125 in the body 105, the second bore 126 in the shunt 112 and the second strap 103.

The shunt 112 is in electrical contact with the first bolt 104 in a contact area 114 on the inner wall of the second bore 126. Since the overhead power line 11 is in electrical contact with the shunt 112 at the conductive surface 113 of the shunt 112, the shunt 112 provides an electrical connection between the overhead power line 11 and the first bolt 104. Since the first bolt 104 is in electrical connection with the straps 103 and the straps 103 are in electrical connection with the second bolt 102, there is an electrical connection between the overhead power line 11 and the second bolt 102.

Arranged in the first bore 125 in the body 105 are two bearings 115 surrounding the first bolt 104. The bearings 115 electrically isolate the body 105 from the first bolt 104.

The bearings 115 may therefore be made out of an insulating material.

The size of the recess 124 in the body 105 and the size of the shunt 112 are such that a small gap is created between the shunt 112 and the body 105. The length of the bearing 115 is such that the shunt 112 cannot move in the axial direction of the first bolt 104, therefore maintaining the gap between the shunt 112 and the body 105. This gap electrically isolates the shunt 112 from the body 105. Consequently the body 105 is electrically isolated from the overhead power line 11, the shunt 112, the first bolt 104 and the straps 103.

Figure 7 shows a sectional view of the shunt 112 along a line CC shown in figure 5. The shunt 112 comprises an approximately rectangular profile. An upper end of the shunt 112 comprises the conductive surface 113. The conductive surface 113 is concave. This is advantageous, as it increases the contact area between the conductive surface 113 and the approximately cylindrical overhead power line 11. A lower end of the shunt 112 comprises the second bore 126. An inner wall of the second boar 126 constitutes the contact area 114.

Figure 8 shows another sectional view of the shunt 112 along a line EE shown in figure 7. In this viewing direction the shunt 112 comprises approximately a profile of an isosceles trapezoid. The contact surface 113 is arranged along the longer of the two parallel sites of the trapezoid.

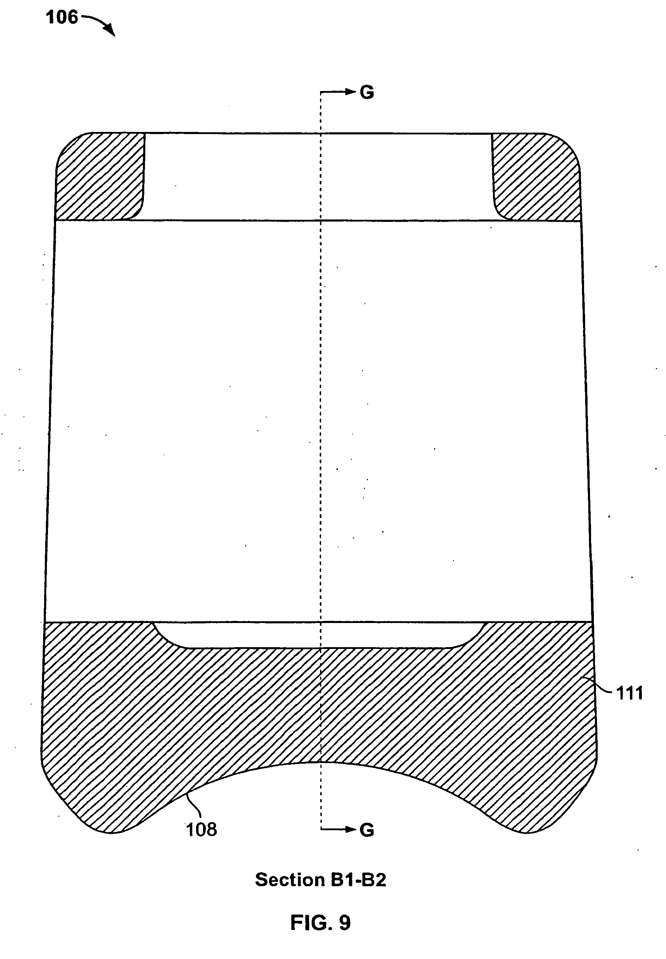

Figure 9 shows a sectional view of the fixation body 111 of the locking system 106 along the line 81B2 shown in figure 2. The fixation body 111 comprises the locking surface 108. The locking surface 108 is concave, which is advantageous, as it increases the contact area between the locking surface 108 and the approximately cylindrical overhead power line 11.

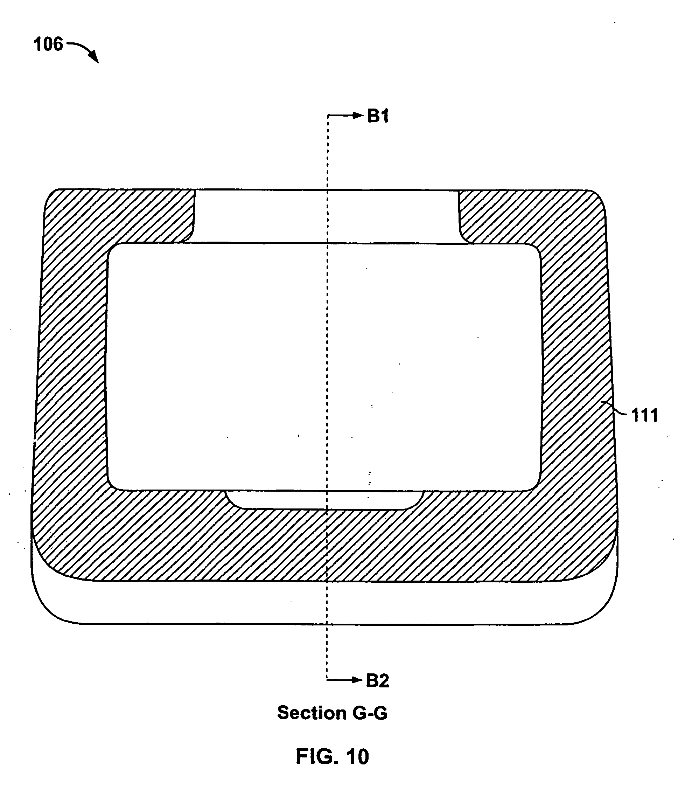

Figure 10 shows a sectional view of the fixation body 111 of the locking system 106 along a line GG shown in figure 9. In this viewing direction the fixation body 111 comprises an approximately rectangular shape. An upper part of the fixation body 111 comprises an opening that is provided for receiving the fixation bolt 109.

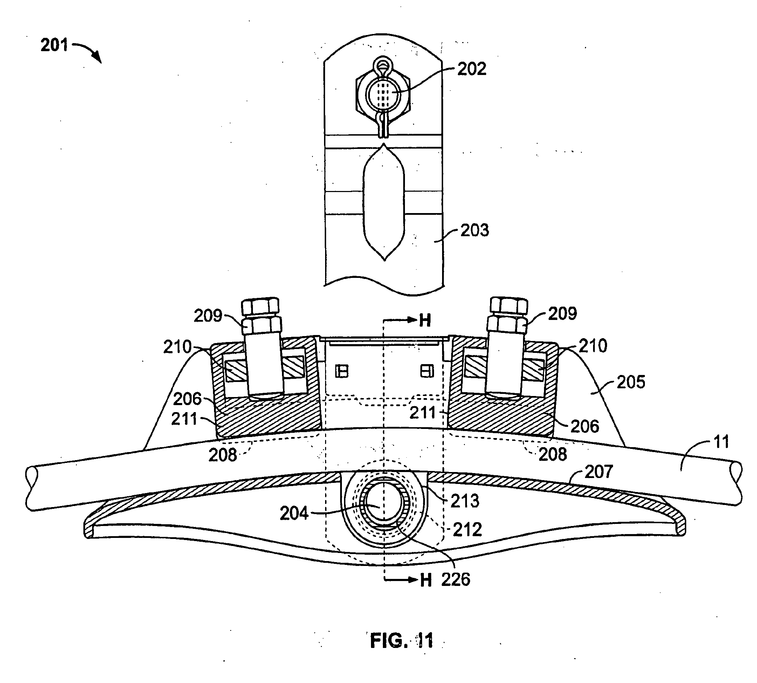

Figure 11 shows a sectional view of a suspension clamp 201 according to a second embodiment of the invention. Like the suspension clamp 101 shown in figure 2, the suspension clamp 201 comprises a body 205 with a contact surface 207 that is coated with a material with a low friction coefficient, for example molybdenum. The body 205 and the contact surface 207 are identical to the body 105 and the contact surface 107. The coating material may be the same as described in conjunction with the contact surface 107 of the suspension clamp 101 according to the first embodiment.

The suspension clamp 201 further comprises two straps 203 that are connected to the body 205 with a first bolt 204 and that are connected to each other with a second bolt 202. The straps 203, the first bolt 204 and the second bolt 202 are identical to the straps 103, the first bolt 104 and the second bolt 102 of the suspension clamp 101 of figure 2.

The suspension clamp 201 further comprises two locking systems 206 that are identical to the locking systems 106 of the suspension clamp 101. Each locking system 206 comprises a fixation body 211, a fixation plate 210 and a fixation bolt 209. Each fixation body 211 comprises a locking surface 208 that is coated with a material with a low friction coefficient, for example molybdenum. The coating material may be the same material as the coating material on the contact surface 207.

The suspension clamp 201 of the second embodiment shown in figure 11 further comprises a shunt 212 that is arranged in a recess of the body 205. Unlike the shunt 112 of the suspension clamp 101 the shunt 212 of the suspension clamp 201 comprises the shape of a roller. In an axial direction of the roller the shunt 212 comprises a second bore 226 that is provided for receiving the first bolt 204. An inner wall of the second boar 226 constitutes a contact area 214 that provides an electrical contact between the shunt 212 and the first bolt 204. The shunt 212 further comprises a conductive surface 213 that is formed by the tread of the roller-shaped shunt 212. The conductive surface 213 is in contact with the overhead power line 11 and provides an electrical connection between the overhead power line 11 and the shunt 212. The shunt 212 is made of an electrically conductive material. The shunt 212 may for example comprise copper.

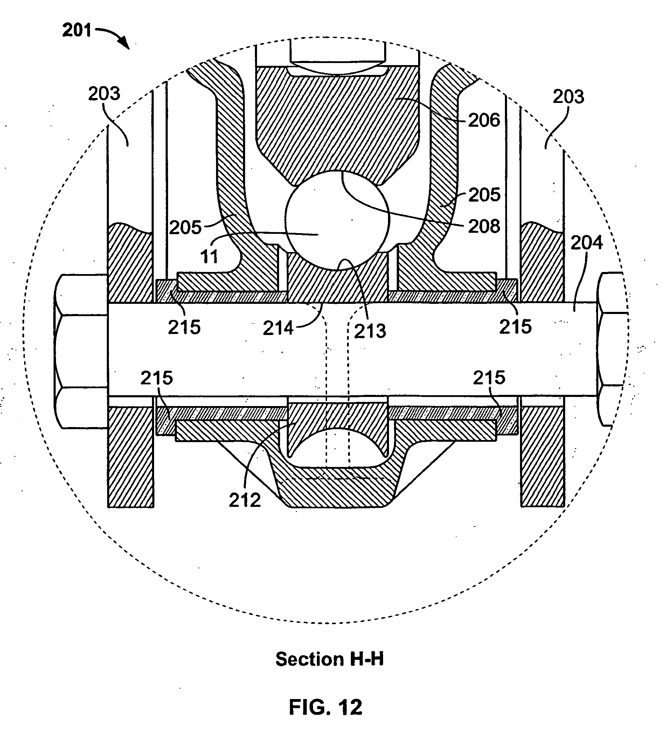

Figure 12 shows a detail of a sectional view of the suspension clamp 201 along a line HH shown in figure 11. Figure 12 shows that the conductive surface 213 of the shunt 212 is concave, which is advantageous, as it increases the contact area between the conductive surface 213 and the essentially cylindrical overhead power line 11.

The suspension clamp 201 further comprises two bearings 215 that are provided between the first bolt 204 and the body 205 of the suspension clamp 201 to electrically isolate the first bolt 204 from the body 205. A small gap between the body 205 and the shunt 212 electrically isolates the body 205 from the shunt 212. This complies with the description of the suspension clamp 101 according to the first embodiment.

Inside the recess of the body 205 the roller-shaped shunt 212 can rotate around the axis constituted by the first bolt 204. If the overhead power line 11 slips in an axial direction of the overhead power line 11 through the suspension clamp 201 the conductive surface 213 of the shunt 212 can roll along the surface of the overhead power line 11. This has the advantage that the conductive surface 213 of the shunt 212 is not damaged by abrasion in case the overhead power line 11 slips through the suspension clamp 201.

The suspension clamps 101 and 201 are designed for suspending the overhead power line 11. In normal operation the suspension clamps 101, 201 should tightly retain the overhead power line 11, without allowing the overhead power line 11 to slip in an axial direction of the overhead power line 11 through the suspension clamps 101, 201. If, however, a force F is applied on the overhead power line 11 in an axial direction of the overhead power line 11 and that force F exceeds a predefined threshold value, the overhead power line 11 must be permitted to slip through the suspension clamps 101, 201. This may for example be the case if one mast of an overhead power line system has crashed. If the force F applied to the overhead power line 11 exceeds the predefined threshold value it is desired that the overhead power line 11 may slip through the suspension claims 101, 201 while experiencing an approximately constant mechanical slipping force. Furthermore, neither the contact surfaces 107, 207, the locking surfaces 108, 208 or the wires of the stranded conductors of the overhead power line 11 should be damaged by the movement of the overhead power line 11. This is achieved by coating the contact surfaces 107, 207 and the locking surfaces 108, 208 with a material with a low friction coefficient, preferably with molybdenum.

A further purpose of the suspension clamps 101 and 201 is to flow-out short circuit current between the overhead power line 11 and the suspension clamps 101, 201 in case of a flash-over occurring on the overhead power line transmission grid. In the suspension clamps 101, 201 this function is achieved by providing an electrical connection between the second bolt 102, 202 and the overhead power line 11 via the straps 103, 203, the first bolt 104, 204 and the shunt 112, 212.

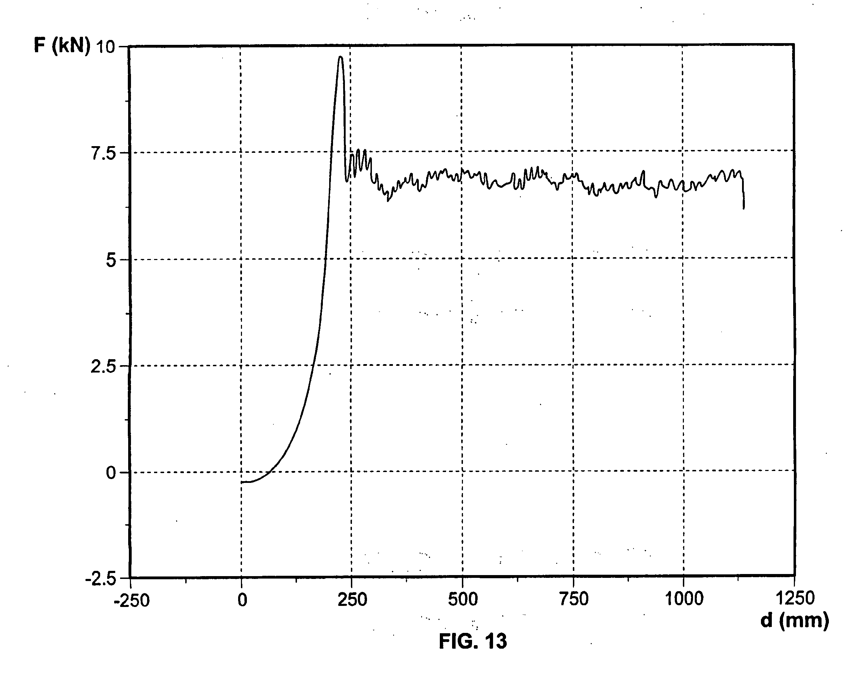

Figure 13 shows a graph depicting the force F applied to the overhead power line 11 in an axial direction of the overhead power line 11 that is necessary to slip the overhead power line 11 through the suspension clamp 101, 201 by a distance d. As can be seen in the graph of figure 13, the force F applied to the overhead power line 11 needs to exceed a threshold value to start moving the overhead power line 11 through the suspension claims 101, 201. After the threshold value has been exceeded, the suspension clamp 101, 201 applies an approximately constant mechanical slipping force on the overhead power line 11. The threshold value of the force F and the mechanical slipping force applied to the overhead power line 11 may be regulated with the fixation bolts 109, 209 of the locking systems 106, 206 of the suspension clamps 101, 202.

### Reference symbols

- 11: Overhead power line

- 101: suspension clamp
- 102: second bolt
- 103: strap
- 104: first bolt
- 105: body
- 106: locking system
- 107: contact surface (on body)
- 108: locking surface
- 109: fixation bolt
- 110: fixation plate
- 111: fixation body
- 112: shunt
- 113: conductive surface (shunt)
- 114: contact area
- 115: bearing
- 121: first upper arm of body
- 122: second upper arm of body
- 123: lower ridge of body
- 124: recess
- 125: first bore (body)
- 126: second bore (shunt)

- 201: suspension clamp
- 202: second bolt
- 203: strap
- 204: first bolt
- 205: body
- 206: locking system
- 207: contact surface
- 208: locking surface
- 209: fixation bolt
- 210: fixation plate
- 211: fixation body
- 212: shunt
- 213: conductive surface
- 214: contact area
- 215: bearing
- 226: second bore

- F: force
- d: sliding distance

## Claims

1. A suspension clamp (101, 201) for suspending an overhead power line (11),
the suspension clamp (101, 201) comprising a body (105, 205) with a contact surface (107, 207) and at least one locking system (106, 206) with a locking surface (108, 208),
wherein the contact surface (107, 207) and the locking surface (108, 208) are designed for clamping the overhead power line (11),
wherein the suspension clamp (101, 201) further comprises a shunt (112, 212) with an electrically conductive surface (113, 213),
**characterized in that**
the conductive surface (113, 213) is designed for electrically contacting the overhead power line (11), wherein the contact surface (107, 207) and the locking surface (108, 208) comprise a lower electrical conductivity than the conductive surface (113, 213) of the shunt (112, 212).

2. The suspension clamp (101, 201) according to claim 1, wherein the contact surface (107, 207) and the locking surface (108, 208) are coated with a coating material,
wherein the coating material comprises a lower electrical conductivity than the material of the conductive surface (113, 213) of the shunt (112, 212).

3. The suspension clamp (101, 201) according to claim 2, wherein the coating material comprises molybdenum.

4. The suspension clamp (101, 201) according to one of the previous claims,
wherein the shunt (112, 212) comprises copper.

5. The suspension clamp (201) according to one of the previous claims,
wherein the shunt (212) comprises the shape of a roller,
wherein the conductive surface (213) forms the tread of the roller.

6. The suspension clamp (101) according to one of claims 1 to 4,
wherein the shunt (112) approximately comprises the profile of an isosceles trapezoid,
wherein the conductive surface (113) is arranged along the longer of the two parallel sides of the trapezoid.

7. The suspension clamp (101, 201) according to one of the previous claims,
wherein a central area of the contact surface (107, 207) comprises a recess,
wherein the conductive surface (113, 213) is arranged in the recess of the contact surface (107, 207), wherein the contact surface (107, 207) and the conductive surface (113, 213) together form a supporting area for the overhead power line (11).

8. The suspension clamp (101, 201) according to claim 7, wherein the conductive surface (113, 213) of the shunt (112, 212) protrudes from the contact surface (107, 207) of the body (105, 205).

9. The suspension clamp (101, 201) according to one of the previous claims,
wherein a first and a second locking system (106, 206) are provided,
wherein the locking surfaces (108, 208) of the first and the second locking systems (106, 206) are opposed to the contact surface (107, 207),
wherein the locking surface (108, 208) of the first locking system (106, 206), the conductive surface (113, 213) of the shunt (112, 212) and the locking surface (108, 208) of the second locking system (106, 206) are arranged consecutively in the running direction of the overhead power line (11).

10. The suspension clamp (101, 201) according to one of the previous claims,
wherein the body (105, 205) comprises an essentially U-shaped profile formed by two upper arms (121, 122), wherein the contact surface (107, 207) is arranged in a groove formed between the two upper arms (121, 122),
wherein a lower ridge (123) is attached to the closed side of the U-shaped body (105, 205),
wherein a central area of the lower ridge (123) in the running direction of the overhead power line (11) comprises a recess,
wherein the shunt (112, 212) is arranged in the recess of the lower ridge (123).

11. The suspension clamp (101, 201) according to one of the previous claims,
the suspension clamp (101, 201) further comprising at least one strap (103, 203) that extends approximately perpendicular to the running direction of the overhead power line (11), wherein the shunt (112, 212), the strap (103, 203) and the body (105, 205) are connected by a first bolt (104, 204).

12. The suspension clamp (101, 201) according to claim 11,
wherein the first bolt (104, 204) and the strap (103, 203) are electrically conductive,
wherein the first bolt (104, 204) provides an electrical connection between the shunt (112, 212) and the strap (103, 203).

13. The suspension clamp (101, 201) according to one of claims 11 or 12,
wherein the body (105, 205) and the strap (103, 203) are independently pivotable around the first bolt (104, 204).

14. The suspension clamp (101, 201) according to one of claims 11 to 13,
wherein at least one insulating bearing (115, 215) is provided between the first bolt (104, 204) and the body (105, 205),
wherein the insulating bearing (115, 215) electrically isolates the body (105, 205) from the first bolt (104, 204).

15. The suspension clamp (101, 201) according to one of claims 11 to 14,
wherein the suspension clamp (101, 201) comprises two straps (103, 203),
wherein the two straps (103, 203) are connected by a second bolt (102, 202),
wherein the second bolt (102, 202) is electrically connected to the two straps (103, 203).

## Patentansprüche

1. Aufhängungsklemme (101, 201) zum Aufhängen einer Freileitung (11),
wobei die Aufhängungsklemme (101, 201) einen Körper (105, 205) mit einer Kontaktfläche (107, 207) und wenigstens ein Verriegelungssystem (106, 206) mit einer Verriegelungsfläche (108, 208) umfasst,
wobei die Kontaktfläche (107, 207) und die Verriegelungsfläche (108, 208) zum Festklemmen der Freileitung (11) ausgelegt sind,
wobei die Aufliängungsklemme (101, 201) ferner einen Nebenschluss (112, 212) mit einer elektrisch leitenden Fläche (113, 213) umfasst,
**dadurch gekennzeichnet, dass**
die leitende Fläche (113, 213) für einen elektrischen Kontakt mit der Freileitung (11) ausgelegt ist,
wobei die Kontaktfläche (107, 207) und die Verriegelungsfläche (108, 208) eine geringere elektrische Leitfähigkeit haben als die leitende Fläche (113, 213) des Nebenschlusses (112, 212).

2. Aufhängungsklemme (101,201) nach Anspruch 1,
wobei die Kontaktfläche (107, 207) und die Verriegelungsfläche (108, 208) mit einem Beschichtungsmaterial überzogen sind,
wobei das Beschichtungsmaterial eine geringere elektrische Leitfähigkeit hat als das Material der leitenden Fläche (113, 213) des Nebenschlusses (112, 212).

3. Aufhängungsklemme (101, 201) nach Anspruch 2,
wobei das Beschichtungsmaterial Molybdän beinhaltet.

4. Aufliängungsklemme (101, 201) nach einem der vorherigen Ansprüche,
wobei der Nebenschluss (112, 212) Kupfer beinhaltet.

5. Aufhängungsklemme (201) nach einem der vorherigen Ansprüche,
wobei der Nebenschluss (212) die Form einer Rolle hat,
wobei die leitende Fläche (213) die Lauffläche der Rolle bildet.

6. Aufhängungsklemme (101) nach einem der Ansprüche 1 bis 4,
wobei der Nebenschluss (112) etwa das Profil eines gleichschenkligen Trapezoids hat,
wobei die leitende Fläche (113) entlang der längeren der beiden parallelen Seiten des Trapezoids angeordnet ist.

7. Aufhängungsklemme (101, 201) nach einem der vorherigen Ansprüche,
wobei ein mittlerer Bereich der Kontaktfläche (107, 207) eine Aussparung aufweist,
wobei die leitende Fläche (113, 213) in der Aussparung der Kontaktfläche (107, 207) angeordnet ist,
wobei die Kontaktfläche (107, 207) und die leitende Fläche (113, 213) zusammen einen Abstützungsbereich für die Freileitung (11) bilden.

8. Aufhängungsklemme (101, 201) nach Anspruch 7,
wobei die leitende Fläche (113, 213) des Nebenschlusses (112, 212) von der Kontaktfläche (107, 207) des Körpers (105, 205) vorsteht.

9. Aufhängungsklemme (101, 201) nach einem der vorherigen Ansprüche,
wobei ein erstes und ein zweites Verriegelungssystem (106, 206) vorgesehen sind,
wobei die Verriegelungsflächen (108, 208) des ersten und des zweiten Verriegelungssystems (106, 206) der Kontaktfläche (107, 207) gegenüber liegen,
wobei die Verriegelungsfläche (108, 208) des ersten Verriegelungssystems (106, 206), die leitende Fläche (113, 213) des Nebenschlusses (112, 212) und die Verriegelungsfläche (108, 208) des zweiten Verriegelungssystems (106, 206) aufeinanderfolgend in der Laufrichtung der Freileitung (11) angeordnet sind.

10. Aufhängungsklemme (101, 201) nach einem der vorherigen Ansprüche,
wobei der Körper (105, 205) ein im Wesentlichen U-förmiges Profil hat, das von zwei oberen Armen (121, 122) gebildet wird,
wobei die Kontaktfläche (107, 207) in einer zwischen den beiden oberen Armen (121, 122) ausgebildeten Nut angeordnet ist,
wobei ein unterer Grat (123) an der geschlossenen Seite des U-förmigen Körpers (105, 205) angebracht ist,
wobei ein mittlerer Bereich des unteren Grats (123) in der Laufrichtung der Freileitung (11) eine Aussparung aufweist,
wobei der Nebenschluss (112, 212) in der Aussparung des unteren Grats (123) angeordnet ist.

11. Aufhängungsklemme (101, 201) nach einem der vorherigen Ansprüche,
wobei die Aufhängungsklemme (101, 201) ferner wenigstens einen Riemen (103, 203) umfasst, der etwa lotrecht zur Laufrichtung der Freileitung (11) verläuft,
wobei der Nebenschluss (112, 212), der Riemen (103, 203) und der Körper (105, 205) durch einen ersten Schraubbolzen (104, 204) verbunden sind.

12. Aufllängungsklemme (101, 201) nach Anspruch 11,
wobei der erste Schraubbolzen (104, 204) und der Riemen (103, 203) elektrisch leitend sind,
wobei der erste Schraubbolzen (104, 204) eine elektrische Verbindung zwischen dem Nebenschluss (112, 212) und dem Riemen (103, 203) bildet.

13. Aufhängungsklemme (101, 201) nach Anspruch 11 oder 12,
wobei der Körper (105, 205) und der Riemen (103, 203) unabhängig um den ersten Schraubbolzen (104, 204) geschwenkt werden können.

14. Aufhängungsklemme (101, 201) nach einem der Ansprüche 11 bis 13,
wobei wenigstens ein Isolierlager (115, 215) zwischen dem ersten Schraubbolzen (104, 204) und dem Körper (105, 205) vorgesehen ist,
wobei das Isolierlager (115, 215) den Körper (105, 205) elektrisch vom ersten Schraubbolzen (104, 204) isoliert.

15. Aufhängungsklemme (101, 201) nach einem der Ansprüche 11 bis 14,
wobei die Aufhängungsklemme (101, 201) zwei Riemen (103, 203) umfasst,
wobei die beiden Riemen (103, 203) durch einen zweiten Schraubbolzen (102, 202) verbunden sind,
wobei der zweite Schraubbolzen (102, 202) elektrisch mit den beiden Riemen (103, 203) verbunden ist.

## Revendications

1. Pince de suspension (101, 201) pour suspendre une ligne électrique aérienne (11),
la pince de suspension (101, 201) comprenant un corps (105, 205) avec une surface de contact (107, 207) et au moins un système de verrouillage (106, 206) avec une surface de verrouillage (108, 208),
dans laquelle la surface de contact (107, 207) et la surface de verrouillage (108, 208) sont conçues pour serrer la ligne électrique aérienne (11),
dans laquelle la pince de suspension (101, 201) comprend, en outre, un shunt (112, 212) avec une surface électriquement conductrice (113, 213),
**caractérisée par le fait que**
la surface conductrice (113, 213) est conçue pour être en contact électrique avec la ligne électrique aérienne (11),
dans laquelle la surface de contact (107, 207) et la surface de verrouillage (108, 208) ont une plus faible conductivité électrique que la surface conductrice (113, 213) du shunt (112, 212).

2. Pince de suspension (101, 201) selon la revendication 1,
dans laquelle la surface de contact (107, 207) et la surface de verrouillage (108, 208) sont couvertes d'un matériau de revêtement,
dans laquelle le matériau de revêtement a une plus faible conductivité électrique que le matériau de la surface conductrice (113, 213) du shunt (112, 212).

3. Pince de suspension (101, 201) selon la revendication 2,
dans laquelle le matériau de revêtement comprend le molybdène.

4. Pince de suspension (101, 201) selon l'une quelconque des revendications précédentes,
dans laquelle le shunt (112, 212) comprend du cuivre.

5. Pince de suspension (201) selon l'une quelconque des revendications précédentes,
dans laquelle le shunt (212) a la forme d'un galet,
dans laquelle la surface conductrice (213) forme la surface de roulement du galet.

6. Pince de suspension (101) selon l'une quelconque des revendications 1 à 4,
dans laquelle le shunt (112) a approximativement le profil d'un trapèze isocèle,
dans laquelle la surface conductrice (113) est disposée le long du plus long des deux côtés parallèles du trapèze.

7. Pince de suspension (101, 201) selon l'une quelconque des revendications précédentes,
dans laquelle une zone centrale de la surface de contact (107, 207) est pourvue d'un creux,
dans laquelle la surface conductrice (113, 213) est située dans le creux de la surface de contact (107, 207),
dans laquelle la surface de contact (107, 207) et la surface conductrice (113, 213) forment, ensemble, une zone de support pour la ligne électrique aérienne (11).

8. Pince de suspension (101, 201) selon la revendication 7,
dans laquelle la surface conductrice (113, 213) du shunt (112, 212) fait saillie par rapport à la surface de contact (107, 207) du corps (105, 205).

9. Pince de suspension (101, 201) selon l'une quelconque des revendications précédentes,
dans laquelle un premier et un second système de verrouillage (106, 206) sont prévus,
dans laquelle les surfaces de verrouillage (108, 208) du premier et du second système de verrouillage (106, 206) sont opposées à la surface de contact (107, 207),
dans laquelle la surface de verrouillage (108, 208) du premier système de verrouillage (106, 206), la surface conductrice (113, 213) du shunt (112, 212) et la surface de verrouillage (108, 208) du second système de verrouillage (106, 206) sont disposées de façon consécutive dans la direction dans laquelle s'étend la ligne électrique aérienne (11).

10. Pince de suspension (101, 201) selon l'une quelconque des revendications précédentes,
dans laquelle le corps (105, 205) a un profil essentiellement en forme de U, formé de deux bras supérieurs (121, 122),
dans laquelle la surface de contact (107, 207) est située dans une gorge formée entre les deux bras supérieurs (121, 122),
dans laquelle le côté fermé du corps en U (105, 205) est pourvu d'une saillie inférieure (123),
dans laquelle une zone centrale de la saillie inférieure (123) dans la direction dans laquelle s'étend la ligne électrique aérienne (11) est pourvue d'un creux,
dans laquelle le shunt (112, 212) est situé dans le creux de la saillie inférieure (123).

11. Pince de suspension (101, 201) selon l'une quelconque des revendications précédentes,
la pince de suspension (101, 201) comprenant, en outre, au moins une bride (103, 203) qui s'étend de manière à peu près perpendiculaire à la direction dans laquelle s'étend la ligne électrique aérienne (11),
dans laquelle le shunt (112, 212), la bride (103, 203) et le corps (105, 205) sont reliés par un premier boulon (104, 204).

12. Pince de suspension (101, 201) selon la revendication 11,
dans laquelle le premier boulon (104, 204) et la bride (103, 203) sont électriquement conducteurs,
dans laquelle le premier boulon (104, 204) fournit une liaison électrique entre le shunt (112, 212) et la bride (103, 203).

13. Pince de suspension (101, 201) selon l'une des revendications 11 ou 12,
dans laquelle le corps (105, 205) et la bride (103, 203) peuvent pivoter de façon indépendante autour du premier boulon (104, 204).

14. Pince de suspension (101, 201) selon l'une des revendications 11 à 13,
dans laquelle au moins un coussinet isolant (115, 215) est prévu entre le premier boulon (104, 204) et le corps (105, 205),
dans laquelle le coussinet isolant (115, 215) isole électriquement le corps (105, 205) du premier boulon (104, 204).

15. Pince de suspension (101, 201) selon l'une des revendications 11 à 14,
dans laquelle la pince de suspension (101, 201) comprend deux brides (103, 203),
dans laquelle les deux brides (103, 203) sont reliées par un second boulon (102, 202),
dans laquelle le second boulon (102, 202) est relié électriquement aux deux brides (103,203).
